# FASCICULE DE BREVET EUROPEEN

(11) **EP 2 257 409 B1**
(45) Date de publication et mention de la délivrance du brevet: **12.10.2016**
(21) Numéro de dépôt: 09728206.5
(22) Date de dépôt: 25.03.2009
(51) Int. Cl.: B23P 13/02, B23P 15/00, F01D 5/34, B23C 3/18, B24C 1/04, B26F 3/00

(54) **PROCÉDÉ DE FABRICATION D'UN DISQUE AUBAGÉ MONOBLOC, PAR DECOUPE AU JET D'EAU ABRASIF**
VERFAHREN ZUR HERSTELLUNG EINER EINTEILIGEN SCHAUFELSCHEIBE DURCH ABRASIVWASSERSTRAHLSCHNEIDEN
METHOD FOR PRODUCING A ONE-PIECE BLADED DISC BY ABRASIVE WATER-JET CUTTING

(30) Priorité: 31.03.2008 FR 0852076
(43) Date de publication de la demande: 08.12.2010
(73) Titulaire: Snecma, 75015 Paris (FR)
(72) Inventeur: BERLANGER, Serge, F-91310 Leuville Sur Orge (FR); BORDU, Sébastien, F-77170 Brie Comte Robert (FR); MALEVILLE, Thierry, Jean, F-91490 Milly La Foret (FR); ROCA, Christophe, Charles, Maurice, F-91450 Soisy Sur Seine (FR)
(74) Mandataire: Ilgart, Jean-Christophe
(86) Numéro de dépôt international: PCT/EP2009/053485
(87) Numéro de publication internationale: WO 2009/121767

(56) Documents cités:
- EP-A- 1 285 714
- EP-A- 1 502 682
- EP-A2- 0 992 310
- EP-A2- 1 652 611
- FR-A- 2 699 850
- US-B1- 6 276 899
- HARRIS I D: "ABRASIVE WATER JET CUTTING AND ITS APPLICATIONS AT TWI (UK)" WELDING IN THE WORLD, ELSEVIER / INTERNATIONAL INSTITUTE OF WELDING, ROISSY, FR, vol. 33, no. 4, 1 juillet 1994 (1994-07-01), pages 277-286, XP000454830 ISSN: 0043-2288

## Description

### DOMAINE TECHNIQUE

La présente invention se rapporte de façon générale au domaine de la fabrication des disques aubagés monoblocs, de préférence pour turbomachine d'aéronef.

### ETAT DE LA TECHNIQUE ANTERIEURE

La fabrication d'un disque aubagé monobloc, également dénommé « DAM », ou « blisk » en anglais, est habituellement mise en oeuvre par fraisage d'un bloc de matière, généralement en titane.

Le document EP 1 285 714 décrit un tel procédé de fabrication. Cette technique, bien que maîtrisée, ne se révèle pas totalement optimisée, dans la mesure où les temps de fabrication sont très élevés, principalement en raison de l'important retrait de matière à réaliser, à savoir parfois jusqu'à 75% en poids du bloc de matière initial, voire plus encore.

Les coûts de production se révèlent également pénalisés par ce temps de fabrication élevé, qui d'une part implique la présence prolongée des opérateurs auprès des fraiseuses, et d'autre part provoque une forte usure des outillages, en particulier des têtes de fraiseuses relativement onéreuses.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention concerne un procédé de fabrication d'un disque aubagé monobloc, comprenant :
- une étape de découpe par jet d'eau abrasif d'un bloc de matière, réalisée de manière à faire apparaître des préformes d'aubes s'étendant radialement à partir d'un disque, puis
- une étape de fraisage des préformes d'aubes.

Ainsi, le principe de l'invention repose sur la mise en oeuvre d'une étape préalable de découpe par jet d'eau abrasif d'un bloc de matière, avant que ce dernier ne soit soumis à une ou plusieurs étapes de fraisage.

Cela permet de réduire considérablement les temps et coûts de fabrication par rapport à un procédé uniquement basé sur du fraisage d'un bloc plein, étant donné que la technique de découpe par jet d'eau abrasif permet de retirer une quantité importante de matière, en un temps relativement faible. A titre d'exemple indicatif, pour l'obtention d'un DAM qui nécessitait environ 310 heures de fraisage avec la technique antérieure, elle n'en nécessite à présent plus qu'environ 140 heures, combinées à un nombre très restreint d'heures de découpe au jet d'eau abrasif.

La diminution du temps de fraisage implique que les opérateurs dédiés aux fraiseuses sont sensiblement déchargés, de sorte qu'ils peuvent alors prendre en charge plusieurs fraiseuses, et/ou piloter également l'outillage assurant la découpe par jet d'eau abrasif.

Enfin, la diminution du temps de fraisage implique aussi avantageusement une baisse sensible de l'usure de l'outillage, en particulier des têtes de fraiseuses, ce qui diminue encore davantage les coûts de production.

La mise en oeuvre du procédé s'avère donc particulièrement bien adaptée aux cas où le retrait de matière opéré s'élève à 75%, voire plus, du bloc de matière de départ, puisqu'une grande partie de ce retrait peut s'effectuer rapidement par découpe au jet d'eau abrasif. A cet égard, on fait de préférence en sorte que ladite étape de découpe par jet d'eau abrasif conduise à retirer au minimum 50% en poids dudit bloc de matière. En d'autres termes, le rapport entre le poids du bloc au moment de l'initiation de l'étape de découpe par jet d'eau abrasif, et le poids de ce bloc à la fin de cette étape ayant fait apparaître les préformes d'aubes, est de préférence supérieur à deux.

A cet égard, il est noté l'étape de découpe par jet d'eau abrasif est suivie d'une étape de fraisage des préformes d'aubes, celle-ci étant préférentiellement réalisée de manière à obtenir des ébauches d'aubes mises à profil, cette étape étant de préférence suivie d'une étape de finition par fraisage des ébauches d'aubes, de manière à obtenir les aubes au profil final.

De préférence, ledit disque aubagé monobloc présente un diamètre supérieur ou égal à 800 mm. De préférence, les aubes ont une longueur minimale de 150 mm.

De préférence, ledit disque aubagé monobloc présente un disque d'épaisseur supérieure ou égale à 100 mm. Néanmoins, il peut présenter une épaisseur de l'ordre de 160 mm, voire plus encore, en raison des hautes performances susceptibles d'être atteintes par la technique de découpe par jet d'eau abrasif. Cette épaisseur correspond également sensiblement à la distance selon laquelle s'étend chaque aube, rapportée selon l'axe du DAM, entre le bord d'attaque et le bord de fuite.

De préférence, les aubes du disque aubagé monobloc sont vrillées, l'angle de vrillage pouvant aller jusqu'à 45°, voire plus encore.

De préférence, ledit bloc de matière utilisé est en titane ou l'un de ses alliages.

De préférence, ledit disque aubagé monobloc est un disque aubagé monobloc pour turbomachine d'aéronef.

Encore plus préférentiellement, ledit disque aubagé monobloc est un disque aubagé monobloc de rotor de turbine ou de compresseur de turbomachine d'aéronef.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue partielle en perspective d'un disque aubagé monobloc pour turbomachine, capable d'être obtenu par la mise en oeuvre du procédé de fabrication selon la présente invention ; et
- les figures 2a à 2d représentent des vues schématisant le disque aubagé monobloc à différentes étapes de son procédé de fabrication, lorsque celui-ci se présente sous la forme d'un mode de réalisation préféré.

### EXPOSÉ DÉTAILLÉ DE MODES DE RÉALISATION PRÉFÉRÉS

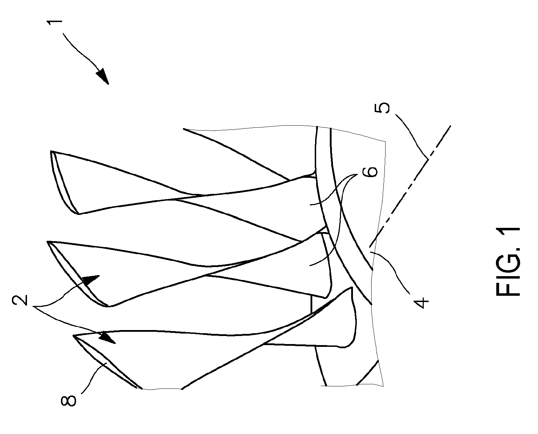

En référence tout d'abord à la figure 1, on peut voir un disque aubagé monobloc 1 destiné à être obtenu par la mise en oeuvre d'un procédé de fabrication selon la présente invention. Il est préférentiellement destiné à la constitution d'un rotor de compresseur ou de turbine d'une turbomachine pour aéronef.

Le disque aubagé monobloc, ci-après dénommé DAM, que l'on recherche à obtenir par le procédé objet de l'invention, est de grandes dimensions, à savoir qu'il présente un diamètre supérieur ou égal à 800 mm, des aubes 2 de longueur au moins égale à 150 mm, et un disque 4 d'épaisseur « e » supérieure ou égale à 130 mm. De plus, les aubes portées par le disque 4 d'axe central 5 sont vrillées de manière importante, puisque l'angle de vrillage peut atteindre 45°, voire plus. A titre informatif, cet angle correspond de manière connue à l'angle fictif entre le pied 6 et la tête 8 d'une même aube 2.

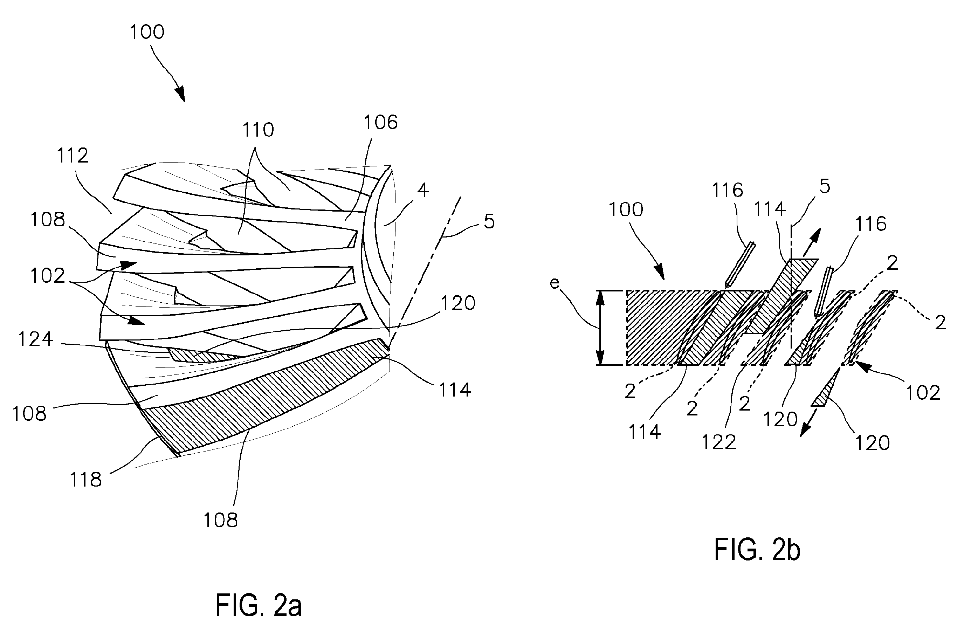

Un mode de réalisation préféré du procédé de fabrication du DAM 1 va maintenant être décrit en référence aux figures 2a à 2d.

Tout d'abord, un bloc de matière en alliage de titane, également dénommé « brut monobloc » et de préférence pré-usiné, subit une première étape de tournage, visant par exemple à usiner ce bloc à 1 mm des cotes finales.

L'étape suivante consiste en une découpe par jet d'eau abrasif du bloc plein, de manière à faire apparaître des préformes d'aubes.

Pour ce faire il est utilisé une machine (non représentée) de découpe par jet d'eau à très haute pression, par exemple 3000 bars, et très haute précision, par exemple à six axes. C'est le très haut niveau de pression de l'eau qui permet de véhiculer l'abrasif en optimisant son effet coupant sur la matière. De manière connue, le jet d'eau est créé par l'intermédiaire d'une buse en diamant ou en saphir. De plus, une chambre de mélange permet l'addition de l'abrasif, tel que du sable. A cet égard, un canon de focalisation homogénéise l'eau et le sable en focalisant ce dernier sur la zone à découper.

Cette technique de découpe par jet abrasif permet un débit de retrait de matière important, ainsi qu'une bonne répétatibilité. Il se révèle ainsi tout à fait adapté au retrait de matière visant à créer des espaces inter-aubes traversant entièrement l'épaisseur « e » du bloc de matière selon son axe 5.

A cet égard, la figure 2a montre en partie haute le bloc de matière 100, une fois l'étape de découpe par jet d'eau abrasif achevée. Ce bloc présente donc des préformes d'aubes 102 s'étendant radialement à partir du disque 4, c'est-à-dire orthogonalement à l'axe central 5. D'une manière générale, la découpe est réalisée dans l'épaisseur du bloc 100 de sorte à faire apparaître des espaces inter-aubes 110 entre les préformes d'aubes 102 directement consécutives circonférentiellement.

Cette étape de découpe par jet d'eau abrasif peut être mise en oeuvre en réalisant une première opération de découpe visant à retirer un premier morceau de matière s'étendant sensiblement de manière vrillée ou hélicoïdale dans la direction radiale à partir du disque, suivie d'une seconde opération de découpe visant à retirer un second morceau de matière moins volumineux, s'étendant également sensiblement de manière vrillée ou hélicoïdale dans la direction radiale.

Plus précisément en référence à la représentation schématique de la figure 2b, on peut voir sur la partie gauche de celle-ci que la première opération de découpe vise en effet à découper un premier morceau de matière 114 s'étendant sur toute l'épaisseur du bloc 100 selon son axe 5. Pour ce faire, l'axe du canon de focalisation 116 se déplace le long d'une ligne 118 en forme globale de U montrée en partie basse de la figure 2a, initiée à partir d'une extrémité radiale du bloc 100, et s'étendant radialement vers l'intérieur jusqu'au disque 4, la ligne 118 longeant ensuite ce disque dans la direction circonférentielle, avant de s'étendre à nouveau radialement vers l'extérieur jusqu'à une autre extrémité radiale du bloc 100.

Durant son parcours le long de la ligne 118 précitée, l'axe du canon 116 est animé d'un mouvement additionnel approprié par rapport à l'axe 5 restant préférentiellement fixe, ce mouvement additionnel se traduisant essentiellement par un pivotement de l'axe du canon selon la direction radiale, et assurant la formation d'un premier morceau 114 de forme sensiblement vrillée dans la direction radiale. D'une façon plus générale, il est noté que la trajectoire décrite par le canon 116 par rapport à l'axe 5 est une trajectoire dite cinq axes, obtenue à l'aide de deux rotations simultanées. Le premier morceau 114 est préférentiellement retiré manuellement par l'opérateur, comme montré schématiquement par la partie centrale de la figure 2b. Comme cela est visible sur cette même figure, en section quelconque orthogonale à la direction radiale, le morceau 114 prend la forme d'un quadrilatère dont les deux côtés opposés, s'étendant selon l'épaisseur du bloc, passent respectivement au plus près des deux aubes directement consécutives 2 destinées à être obtenues une fois le procédé achevé.

Comme cela découle de ce qui précède, chaque retrait d'un premier morceau 114 laisse apparaître la surface de deux préformes d'aubes 102 directement consécutives. De préférence, il est d'abord procédé à la découpe de tous les premiers morceaux 114 dont le nombre est prévu en fonction du nombre d'aubes souhaité pour le DAM, puis il est procédé au retrait manuel de ces morceaux 114, avant de mettre en oeuvre la seconde opération de découpe.

Cette seconde opération est réalisée de manière à ce que les préformes d'aubes qui en découlent se rapprochent au plus près de la forme vrillée à courbure inversée des aubes finales, de laquelle il est difficile de se rapprocher par une simple et unique découpe, étant donné que le jet d'eau abrasif traverse le bloc de manière sensiblement rectiligne, par opposition à la forme courbe des sections d'aubes.

En référence à la représentation schématique de la figure 2b, on peut voir sur la partie droite de celle-ci que la seconde opération de découpe vise en effet à découper un second morceau de matière 120 s'étendant cette fois-ci seulement sur une partie de l'épaisseur du bloc 100, c'est-à-dire seulement sur une partie de l'épaisseur des éléments radiaux 122 formés par le retrait des premiers morceaux 114. En outre, le morceau 120 s'étend également seulement sur une portion radiale de son élément radial 122 associé, à savoir qu'il s'étend à partir du pied sans atteindre la tête, comme cela ressort de la figure 2a.

Pour ce faire, l'axe du canon de focalisation 116 se déplace le long d'une ligne radiale 124, dont une portion est montrée sur la figure 2a. Elle est initiée à partir du pied 4, et s'étend donc sensiblement radialement sans atteindre l'anneau 112 apparu lors du retrait des premiers morceaux 114. Par exemple, la ligne 124 traversée par le jet d'eau abrasif se situe environ à mi-épaisseur des éléments radiaux 122, et est stoppée au-delà de la mi-hauteur radiale de ces derniers.

Durant son parcours le long de la ligne 124 précitée, l'axe du canon 116 est animé d'un mouvement additionnel approprié par rapport à l'axe 5 restant préférentiellement fixe, ce mouvement additionnel se traduisant essentiellement par un pivotement de l'axe du canon selon la direction radiale, et assurant la formation d'un second morceau 120 de forme également sensiblement vrillée dans la direction radiale. D'une façon plus générale, il est noté que la trajectoire décrite par le canon 116 par rapport à l'axe 5 est une trajectoire dite cinq axes, obtenue à l'aide de deux rotations simultanées. Ce second morceau 120, une fois entièrement désolidarisé du pied 5, toujours par jet d'eau abrasif, se décroche préférentiellement tout seul, sans aide de l'opérateur, comme montré schématiquement par la partie droite de la figure 2b.

A ce titre, il est noté que le canon 116 se déplace non seulement le long de la ligne sensiblement radiale 124, mais également le long d'une ligne (non représentée) en forme de portion circulaire s'étendant à partir de l'extrémité radiale intérieure de la ligne 124, le long du pied 4, pour la désolidarisation totale du morceau 120 vis-à-vis de ce dernier.

Comme cela est visible sur la figure 2b, en section quelconque orthogonale à la direction radiale, le morceau 120 prend la forme d'un triangle dont l'un des côtés passe au plus près de l'aube 2 destinée à être obtenue à partir de l'élément radial 122 concerné, une fois le procédé achevé.

Une fois tous les seconds morceaux 120 retirés, le bloc ne présente plus que les préformes d'aubes 102 issues du disque 4, et espacées les unes des autres par les espaces inter-aubes 110.

L'étape de découpe par jet d'eau abrasif est alors achevée, après avoir conduit, au minimum, au retrait de 50% en poids du bloc de matière.

Ensuite, il est mis en oeuvre une étape de fraisage des préformes d'aubes 102, réalisée de manière à obtenir des ébauches d'aubes 202 mises à profil. En d'autres termes, l'objectif de cette étape, mise en oeuvre par exemple à l'aide d'un outillage de fraisage à cinq axes, est de retirer la matière restante sur les préformes d'aubes 102, afin d'arriver au plus proche des cotes finales, par exemple à 0,6 mm.

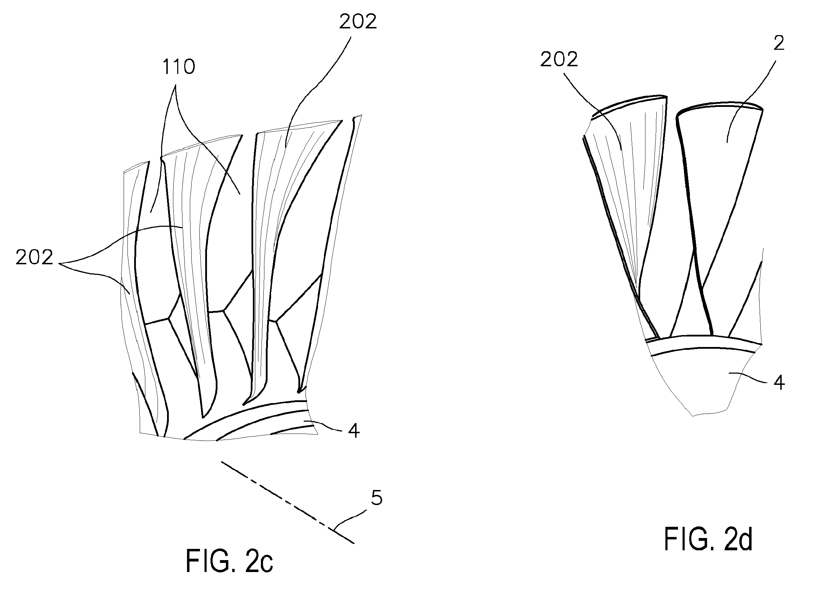

Ici, les préformes 102 sont préférentiellement usinées les unes après les autres, pour former chacune une ébauche d'aube 202 mise à profil, comme représenté sur la figure 2c.

Ensuite, une autre étape de fraisage est réalisée, cette étape dite de finition visant à obtenir, par fraisage, les aubes 2 au profil final, à partir des ébauches 202. L'outillage utilisé permet un usinage plus précis, assurant la mise aux cotes finales, et donc l'obtention des aubes 2 comme cela est montré sur la partie droite de la figure 2d.

A ce stade du procédé, le bloc de matière restant présente un volume inférieur à 25% du volume de ce même bloc tel qu'il se présentait juste avant l'initiation de l'étape de découpe au jet d'eau abrasif, à savoir juste après l'étape précitée de tournage.

En outre, le procédé peut être poursuivi par une ou plusieurs étapes classiques, parmi lesquelles on compte, une étape de polissage, par exemple par ajustage manuel ou par tribofinition, une étape de grenaillage, une étape de mise à longueur des aubes, et/ou une étape d'équilibrage du DAM.

## Revendications

1. Procédé de fabrication d'un disque aubagé monobloc (1), comprenant :
- une étape de découpe par jet d'eau abrasif d'un bloc de matière (100), réalisée de manière à faire apparaître des préformes d'aubes (102) s'étendant radialement à partir d'un disque (4), puis
- une étape de fraisage des préformes d'aubes (102).

2. Procédé selon la revendication 1, dans lequel ladite étape de découpe par jet d'eau abrasif est mise en oeuvre de sorte à retirer au minimum 50% en poids dudit bloc de matière (100).

3. Procédé selon la revendication 1 ou la revendication 2, dans lequel ladite étape de fraisage des préformes d'aubes (102) est réalisée de manière à obtenir des ébauches d'aubes (202) mises à profil, cette étape étant suivie d'une étape de finition par fraisage des ébauches d'aubes (202), de manière à obtenir les aubes (2) au profil final.

4. Procédé selon l'une quelconque des revendications précédentes, dans lequel ledit disque aubagé monobloc présente un diamètre supérieur ou égal à 800 mm.

5. Procédé selon l'une quelconque des revendications précédentes, dans lequel ledit disque aubagé monobloc présente un disque (4) d'épaisseur (e) supérieure ou égale à 100 mm.

6. Procédé selon l'une quelconque des revendications précédentes, dans lequel les aubes (2) du disque aubagé monobloc sont vrillées.

7. Procédé selon l'une quelconque des revendications précédentes, dans lequel ledit bloc de matière (100) utilisé est en titane ou l'un de ses alliages.

8. Procédé selon l'une quelconque des revendications précédentes, dans lequel ledit disque aubagé monobloc est un disque aubagé monobloc pour turbomachine d'aéronef.

9. Procédé selon l'une quelconque des revendications précédentes, dans lequel ledit disque aubagé monobloc est un disque aubagé monobloc de rotor de turbine ou de compresseur de turbomachine d'aéronef.

## Patentansprüche

1. Verfahren zur Herstellung einer einstückigen beschaufelten Scheibe (1), umfassend:
- einen Schritt zum Schneiden eines Materialblocks (100) mittels Abrasiv-Wasserstrahl, welcher derart durchgeführt wird, dass Schaufelvorformlinge (102), die sich von einer Scheibe (4) aus radial erstrecken, zum Vorschein gebracht werden, dann
- einen Schritt zum Fräsen der Schaufelvorformlinge (102).

2. Verfahren nach Anspruch 1, bei dem der Schritt des Schneidens mittels Abrasiv-Wasserstrahl derart durchgeführt wird, dass mindestens 50 Gew.-% des Materialblocks (100) entfernt werden.

3. Verfahren nach Anspruch 1 oder Anspruch 2, bei dem der Schritt des Fräsens der Schaufelvorformlinge (102) derart durchgeführt wird, dass auf Profil gebrachte Schaufelrohlinge (202) erhalten werden, wobei sich an diesen Schritt ein Schritt zur Endbearbeitung durch Fräsen der Schaufelrohlinge (202) anschließt, um die Schaufeln (2) mit dem Endprofil zu erhalten.

4. Verfahren nach einem der vorhergehenden Ansprüche, bei dem die einstückige beschaufelte Scheibe einen Durchmesser von mehr als oder gleich 800 mm aufweist.

5. Verfahren nach einem der vorhergehenden Ansprüche, bei dem die einstückige beschaufelte Scheibe eine Scheibe (4) mit einer Dicke (e) von mehr als oder gleich 100 mm aufweist.

6. Verfahren nach einem der vorhergehenden Ansprüche, bei dem die Schaufeln (2) der einstückigen beschaufelten Scheibe gewunden sind.

7. Verfahren nach einem der vorhergehenden Ansprüche, bei dem der verwendete Materialblock (100) aus Titan oder einem seiner Legierungen besteht.

8. Verfahren nach einem der vorhergehenden Ansprüche, bei dem die einstückige beschaufelte Scheibe eine einstückige beschaufelte Scheibe für eine Turbomaschine eines Luftfahrzeugs ist.

9. Verfahren nach einem der vorhergehenden Ansprüche, bei dem die einstückige beschaufelte Scheibe eine einstückige beschaufelte Scheibe eines Rotors einer Turbine oder eines Verdichters einer Turbomaschine eines Luftfahrzeugs ist.

## Claims

1. Process for manufacturing a single-piece blisk (1), comprising:
- a step in which an abrasive water jet is used to cut a block of material (100), so as to create blade preforms (102) extending radially outwards from a disk (4), then
- a step to mill blade preforms (102).

2. Process according to claim 1, in which said abrasive water jet cutting step consists of removing at least 50% by weight of said block of material (100).

3. Process according to claim 1 or claim 2, in which said step to mill blade preforms (102) is done so as to obtain profiled blade blanks (202), this step preferably being followed by a milling step to finish blade blanks (202), so as to obtain blades (2) to the final profile.

4. Process according to any one of the previous claims, in which the diameter of said single-piece blisk is greater than or equal to 800 mm.

5. Process according to any one of the previous claims, in which the thickness (e) of said single-piece blisk (4) is greater than or equal to 100 mm.

6. Process according to any one of the previous claims, in which the blades (2) of the single-piece blisk are twisted.

7. Process according to any one of the previous claims, in which said material block (100) used is made of titanium or a titanium alloy.

8. Process according to any one of the previous claims, in which said single-piece blisk is a single-piece blisk for an aircraft turbine engine.

9. Process according to any one of the previous claims, in which said single-piece blisk is a single-piece blisk for a turbine or compressor rotor in an aircraft turbine engine.
